# EUROPÄISCHE PATENTSCHRIFT

(11) **EP 1 916 520 B1**
(45) Veröffentlichungstag und Bekanntmachung des Hinweises auf die Patenterteilung: **01.09.2010**
(21) Anmeldenummer: 08001682.7
(22) Anmeldetag: 26.11.2004
(51) Int. Cl.: G01N 27/414

(54) **Elektrisches Bauelement**
Electric component
Composant électrique

(43) Veröffentlichungstag der Anmeldung: 30.04.2008
(62) Teilanmeldung aus: 04803308.8
(73) Patentinhaber: Micronas GmbH, 79108 Freiburg i. Br. (DE)
(72) Erfinder: Lehmann, Mirko, Dr. rer. nat., 9642 Ebnat-Kappel (CH); Freund, Ingo, Dipl.-Ing.(FH), 79117 Freiburg (DE)
(74) Vertreter: Huwer, Andreas

(56) Entgegenhaltungen:
- EP-A- 0 193 251
- WO-A-02/01647
- WO-A-03/014722
- US-A- 5 319 226

## Beschreibung

Die Erfindung betrifft ein elektrisches Bauelement nach dem Oberbegriff von Anspruch 1.

Ein derartiges elektrisches Bauelement ist aus der Praxis bekannt. Es weist einen CMOS-Chip mit einem Halbleiter-Substrat auf, in das als Sensor ein ionensensitiver Feldeffekttransistor (ISFET) integriert ist. Der Sensor hat einen als Gate-Elektrode ausgebildeten aktiven Oberflächenbereich, der zur Detektion von in einem flüssigen Medium enthaltenen Ionen mit dem Medium in Kontakt bringbar ist. Auf dem Substrat sind mehrere aus Aluminium bestehende Leiterbahn-Schichten, so genannte Layer angeordnet, in denen sich Leiterbahnen und/oder Abschnitte von Leiterbahnen erstrecken. Leiterbahnabschnitte von Leiterbahnen, die sich über mehrere Leiterbahn-Schichten verlaufen, sind durch Durchkontaktierungen miteinander verbunden. Zwischen den Leiterbahn-Schichten sowie zwischen der untersten, am dichtesten an dem Substrat angeordneten Leiterbahn-Schicht und dem Substrat ist jeweils eine elektrische Isolationsschicht vorgesehen. Auf dem aus den Leiterbahn-Schichten und den Isolationsschichten gebildeten Schichtstapel ist als Deckschicht eine Passivierungsschicht angeordnet. Die Leiterbahnen verbinden Drain und Source des ISFET mit davon beabstandeten, an der Oberfläche des CMOS-Chips angeordneten Bondpads.

Der CMOS-Chip ist mit einer dicht an ihm anliegenden Kunststoff-Vergussmasse umkapselt, die eine Öffnung hat, die mit dem aktiven Oberflächenbereich verbunden ist und in die das flüssige Medium einfüllbar Ist. Dabei gerät der das Medium an einer Interaktionsfläche mit dem Chip in Kontakt, die sich über einen Teilbereich der Passivierungsschicht und den aktiven Oberflächenbereich erstreckt. Die Leiterbahn-Schichten und die Isolationsschichten erstrecken sich jeweils bis in den Bereich des Chips, der von der Interaktionsfläche überdeckt ist. Die Passivierungsschicht und die Isolationsschichten dienen als Korrosionsschutz für die Leiterbahn-Schichten, der verhindern soll, dass die Leiterbahn-Schichten mit dem flüssigen Medium in Kontakt geraten. In der Praxis hat sich jedoch gezeigt, dass die Passivierungsschicht nur einen begrenzten Korrosionsschutz der Leiterbahn-Schichten ermöglicht und dass die Chips nur eine relativ geringe Lebensdauer aufweisen, wenn die Öffnung mit einem flüssigen oder pastösen Medium befüllt ist. Kommt eine Leiterbahn beispielsweise aufgrund eines Defekts an der Passivierungsschicht mit dem Medium in Kontakt, kann dies zu einem Ausfall des kompletten Chips führten.

Aus EP 0 193 251 A1 ist ferner ein elektrisches Bauelement mit einem Sensor-Chip bekannt, das ein Substrat hat, auf dem eine einen aktiven Oberflächenbereich aufweisende Struktur für einen Sensor angeordnet ist. Der Chip ist von einer durch eine Vergussmasse gebildeten Verkapselung umgeben, die eine Öffnung hat, welche einen Zugang zu dem wenigstens einen aktiven Oberflächenbereich bildet. Der Chip hat in der Öffnung eine sich über den aktiven Oberflächenbereich erstreckende Interaktionsfläche, die In Gebrauchsstellung mit einem flüssigen oder pastösen Medium in Kontakt steht. Das Bauelement hat eine Leiterbahn-Schicht, die als Leiterbahnen ausgebildete Bereiche umfasst, welche außerhalb eines von der Interaktionsfläche überdeckten Bereichs des Chips unter der Vergussmasse angeordnet. Die Leiterbahnen kontaktieren einen in den Chip integrierten Feldeffekttransistor, dessen Kanalbereich zur Detektion von Ionen in einer zu untersuchenden Probe unter der Interaktionsfläche angeordnet ist. Zwischen der Leiterbahn-Schicht und einem Substrat hat der Chip eine elektrische Isolationsschicht Zusätzlich zu dem Feldeffekttransistor weist der Chip weitere elektrische Schaltungselemente auf. Das Bauelement hat den Nachteil, dass für die Verdrahtung der Schaltungselemente eine relativ große Chipfläche benötigt wird, weil nur eine Leiterbahnebene zur Verfügung steht.

Aus WO 02/01647 A1 ist ferner ein gattungsfremdes elektrisches Bauelement mit einem CMOS-Sensor-Chip bekannt, der ein Substrat hat, auf dem eine Passivierungsschicht und eine, einen aktiven Oberflächenbereich aufweisende Struktur für einen Sensor angeordnet sind. Der Sensor-Chip hat eine sich über die Passivierungsschicht und den aktiven Oberflächenbereich erstreckende Interaktionsfläche, die mit einem flüssigen Medium in Kontakt steht. Zwischen der Passivierungsschicht und dem Substrat ist eine erste elektrische Isolationsschicht vorgesehen. Zwischen der Passivierungsschicht und der ersten Isolationsschicht ist bereichsweise eine erste Leiterbahn-Schicht angeordnet, die mehrere seitlich voneinander beabstandete, elektrisch leitende Schichtbereiche hat. Die Schichtbereiche der Leiterbahn-Schicht sind mit der Sensor-Struktur verbunden. Die Interaktionsfläche ist seitlich nicht durch eine Verkapselung begrenzt, die durch eine Vergussmasse gebildet. Dadurch kann das flüssige Medium mit der gesamten Chipoberfläche in Kontakt geraten. Das Bauelement ermöglicht daher nur einen begrenzten Korrosionsschutz für die Leiterbahn-Schicht.

Aus US 5 319 226 ist ein gattungsfremdes elektrisches Bauelement mit einem Sensor-Chip bekannt, der ein Substrat hat, auf dem eine Passivierungsschicht und eine, einen aktiven Oberflächenbereich aufweisende Struktur für einen Sensor angeordnet sind. Dabei ist der aktive Oberflächenbereich in einer in der Passivierungsschicht vorgesehenen Öffnung angeordnet. Innerhalb der Öffnung hat der Sensor-Chip eine sich über den aktiven Oberflächenbereich erstreckende Interaktionsfläche, die mit einem flüssigen Medium in Kontakt steht. Der Chip hat eine Leiterbahnebene, in der außerhalb des von der Öffnung überdeckten Bereichs Leiterbahnen angeordnet sind, die von der Öffnung seitlich beabstandet sind. Da nur eine Leiterbahnebene vorgesehen ist, ermöglicht der Chip nur eine geringe Integrationsdichte. Eine durch eine Vergussmasse gebildete Verkapselung ist in der US 5 319 226 nicht offenbart.

Aus WO 03/014722 A1 ist ferner ein elektrisches Bauelement mit einem Sensor-Chip bekannt, der ein Substrat hat, auf dem eine Passivierungsschicht und eine, einen aktiven Oberflächenbereich aufweisende Struktur für einen Sensor angeordnet sind. Auch hier ist der aktive Oberflächenbereich in einer in der Passivierungsschicht vorgesehenen Öffnung angeordnet. Innerhalb der Öffnung hat der Sensor-Chip eine sich über den aktiven Oberflächenbereich erstreckende Interaktionsfläche, in der eine DNA-Probe immobilisiert ist. Außerhalb des von der Öffnung überdeckten Bereichs sind zwei Ebenen mit Leiterbahnen angeordnet, die jeweils von der Öffnung seitlich beabstandet sind. Da der unter der Interaktionsfläche befindliche Bereich des Chips für die Leiterbahnen nicht genutzt wird, ermöglicht auch dieses Bauelement nur eine relativ geringe Integrationsdichte. Außerdem hat das Bauelement auch keine durch eine Vergussmasse gebildete Verkapselung.

Es besteht deshalb die Aufgabe, ein elektrisches Bauelement der eingangs genannten Art zu schaffen, das kostengünstig mit den bei der Halbleiterfertigung üblichen Standardprozessen herstellbar ist, das aber dennoch eine gute Korrosionsbeständigkeit sowie eine hohe Lebensdauer ermöglicht.

Diese Aufgabe wird mit den Merkmalen des Patentanspruchs 1 gelöst.

Erfindungsgemäß sind dabei zumindest die ein elektrisches Potential führenden Bereiche bzw. die für die elektrische Funktion des Bauelements benötigten Bereiche der ersten, zu der Passivierungsschicht benachbarten Leiterbahn-Schicht vollständig außerhalb des von der Interaktionsfläche überdeckten Bereichs des Chips angeordnet. In dem von der Interaktionsfläche überdeckten Bereich des Chips ist dann zwischen der obersten, den geringsten Abstand zu der Öffnung bzw. dem darin befindlichen flüssigen oder pastösen Medium aufweisenden und die für die elektrische Funktion des Bauelements genutzten Leiterbahnschicht zusätzlich zu der Passivierungsschicht zumindest noch die erste Isolationsschicht angeordnet, wodurch die Korrosionsbeständigkeit gegenüber einem Chip, bei dem zwischen der obersten Leiterbahn-Schicht und dem flüssigen oder pastösen Medium nur die Passivierungsschicht vorgesehen ist, erheblich verbessert ist. Innerhalb des von der Interaktionsfläche überdeckten Bereichs des Chips kann gegebenenfalls mindestens ein elektrisch isolierter, floatender Teilbereich der ersten Leiterbahn-Schicht angeordnet sein, der nicht für eine Spannungs- und/oder Stromführung verwendet wird und somit für die elektrische Funktion des Bauelements ohne Bedeutung ist. Bei der Fertigung des Chips werden nach dem Erzeugen der wenigstens einen Leiterbahn der zweiten Leiterbahnschicht zunächst die erste Isolationsschicht und danach die erste Leiterbahnschicht und die Passivierungsschicht auf dem Chip erzeugt bzw. auf diesen aufgebracht. Die von der Kontur der wenigstens einen Leiterbahn an der von der Leiterbahn entfernten Begrenzungsfläche der Isolationsschicht hervorgerufene Oberflächenstruktur ist gegenüber der Kontur der Leiterbahn der zweiten Leiterbahnschicht bereits wesentlich flacher und geglätteter. Durch die Passivierungsschicht wird diese Oberflächenstruktur nochmals geglättet, so dass die Passivierungsschicht eine weitestgehend plane Oberfläche aufweist, die frei von kantigen Stufen oder Absätzen ist. Somit ist die Gefahr, dass es beim Auftreten von mechanischen Spannungen in dem Chip zu einer Rissbildung in der Passivierungsschicht kommt, erheblich reduziert. Das erfindungsgemäße Bauelement ermöglicht deshalb eine gute Korrosionsbeständigkeit und eine hohe Lebensdauer. Der Chip des Bauelements ist mit den in der Halbleiterfertigung üblichen Standardprozessen kostengünstig herstellbar. Ein aufwändiges und umständliches Einbringen von Gräben in die Chip-Oberfläche kann entfallen. Die Passivierungsschicht kann auch aus mehreren Schichten zusammengesetzt sein, die gegebenenfalls aus unterschiedlichen Werkstoffen bestehen können. Dadurch ergibt sich ein noch besserer Korrosionsschutz. Das elektrische Bauelement kann auch ein Gassensor sein, bei dem das mit der Interaktionsfläche in Kontakt befindliche flüssige Medium eine dünne, beispielsweise 2-3 Nanometer dicke Feuchtigkeitsschicht ist.

Vorteilhaft ist, wenn die zweite Leiterbahnschicht mindestens zwei seitlich voneinander beabstandete, elektrisch leitende Schichtbereiche aufweist, wenn zumindest in dem von der Interaktionsfläche überdeckten Bereich der ersten Leiterbahn-Schicht die Abstände zwischen den seitlich zueinander benachbarten Schichtbereichen dieser Leiterbahn-Schicht jeweils kleiner sind als das 1,2-fache, insbesondere das 1,1 -fache, gegebenenfalls als das 1,0-fache, eventuell das 0,9-fache und bevorzugt als das 0,8-fache der Dicke der zweiten Leiterbahn-Schicht. Dadurch ergibt sich eine noch planere Oberfläche der Passivierungsschicht, wodurch die Gefahr, dass sich beim Auftreten von mechanischen Spannungen in dem Chip ein Riss in der Passivierungsschicht bildet, weiter reduziert wird. Das elektrische Bauelement weist also eine noch größere Lebensdauer auf

Vorteilhaft ist, wenn die erste Leiterbahn-Schicht aus Metall, vorzugsweise aus Aluminium, und die zweite Leiterbahn-Schicht aus einem dotierten Halbleiterwerkstoff, vorzugsweise aus Polysilizium, besteht. Die aus Aluminium bestehenden Leiterbahnen weisen eine gute elektrische Leitfähigkeit auf Da Aluminium nur eine relativ geringe Korrosionsbeständigkeit aufweist, ist die oberflächennahe erste Leiterbahn-Schicht nur außerhalb des von der Interaktionsfläche überdeckten Chip-Bereichs und mit Abstand zu diesem Bereich vorgesehen. Innerhalb des von der Interaktionsfläche überdeckten Chip-Bereichs wird (werden) nur die aus Polysilizium bestehende(n) Leiterbahn-Schicht für die Leiterbahnführung verwendet. Der Chip weist dadurch eine noch bessere Korrosionsbeständigkeit gegenüber einem in der Öffnung befindlichen flüssigen oder pastösen Medium auf Außerhalb des von der Interaktionsfläche überdeckten Chip-Bereichs können die Polysilizium-Leiterbahnen mit den Aluminium-Leiterbahnen verbunden sein. Zwischen der ersten Leiterbahn-Schicht und der zweiten Leiterbahn-Schicht können gegebenenfalls mindestens eine weitere Leiterbahn-Schicht aus Metall und mindestens eine dieser zugeordnete weitere Isolationsschicht angeordnet sein, d.h. die zweite Leiterbahn-Schicht muss nicht notwendigerweise die zweitoberste Leiterbahn-Schicht und die zweite lsolationsschicht nicht notwendigerweise die zweitoberste Isolationsschicht des Sensor-und/oder Aktuator-Chips sein.

Bei einer zweckmäßigen Ausgestaltung der Erfindung ist auf dem Substrat außerhalb des von der Öffnung überdeckten Bereichs eine Struktur für eine elektronische Schaltung angeordnet, insbesondere für eine Auswerteeinrichtung, wobei diese Struktur über wenigstens eine der Leiterbahn-Schichten elektrisch mit der Sensor-und/oder Aktuator-Struktur verbunden ist. Die aus der elektronischen Schaltung und dem Sensor und/oder Aktuator bestehende Schaltungsanordnung ermöglicht dann besonders kompakte Abmessungen. Außerdem ist die Schaltungsanordnung mit Methoden der Halbleiterfertigung kostengünstig in Serienfertigung herstellbar.

Nachfolgend ist ein Ausführungsbeispiel der Erfindung anhand der Zeichnung näher erläutert. Es zeigt:

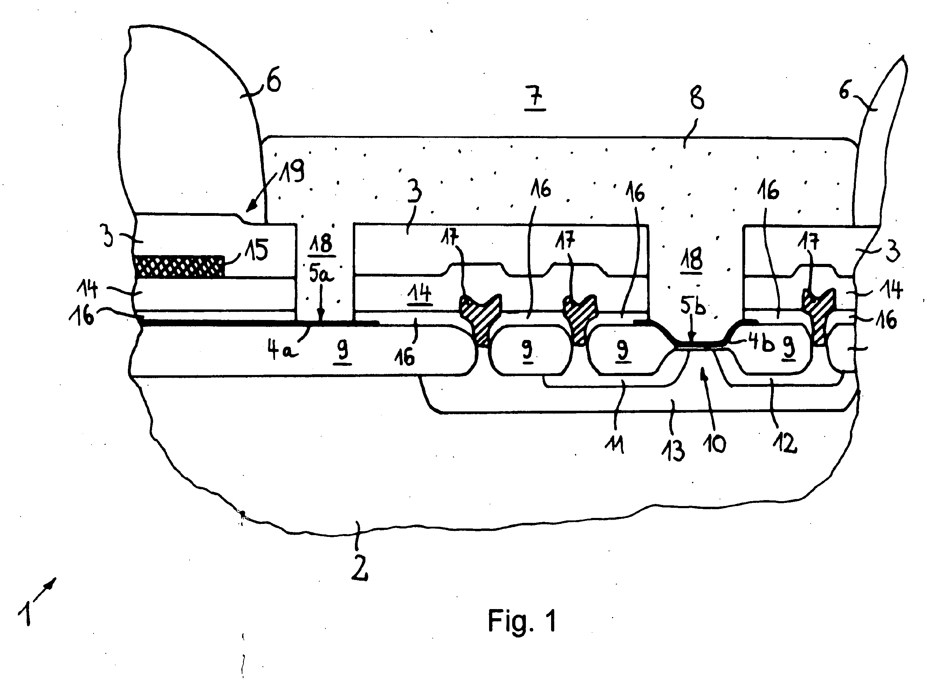

- Fig. 1: einen Teilquerschnitt durch das Ausführungsbeispiel des erfindungsgemäßen elektrischen Bauelements.

Ein in Fig. 1 im Ganzen mit 1 bezeichnetes elektrisches Bauelement weist einen Sensor-Chip auf, der ein Halbleiter-Substrat 2 aus p-dotiertem Silizium hat, auf dem Strukturen für Sensoren angeordnet sind. Als Decklage weist der Sensor-Chip eine Passivierungsschicht 3 auf, die vorzugsweise aus Siliziumnitrid und/oder Siliziumdioxid besteht und mehrere 100 nm bis einige µm dick sein kann. Eine in Fig. 1 links dargestellte Sensor-Struktur weist eine Edelmetall-Elektrode 4a mit einem aktiven Oberflächenbereich 5a und eine in Fig. 1 rechts dargestellte Sensor-Struktur eine Siliziumnitrid-Schicht 4b mit einem aktiven Oberflächenbereich 5b auf Der Chip ist von einer in Fig. 1 und 2 nur teilweise dargestellten, durch eine Vergussmasse gebildeten Verkapselung 6 umgeben, die eine Öffnung 7 hat, welche einen Zugang zu den aktiven Oberflächenbereichen 5a, 5b bildet. Zumindest der die Öffnung umgrenzende Rand der Verkapselung 6 liegt dichtend an dem Chip an. In die Öffnung 7 kann ein zu untersuchendes flüssiges oder pastöses Medium 8 eingebracht werden, das den Chip an einer Interaktionsfläche kontaktiert, die bei dem in Fig. 1 gezeigten Ausführungsbeispiel dem gesamten, von der Öffnung 7 überdeckten freien Oberflächenbereich des Chips 1 entspricht. Es ist aber auch denkbar, dass sich die Interaktionsfläche nur über einen Teil des von der Öffnung 7 überdeckten Oberflächenbereichs des Chips 1 erstreckt, beispielsweise wenn dieser nur bereichsweise in ein flüssiges Medium 8 eingetaucht ist.

Bei dem Ausführungsbeispiel nach Fig. 1 ist die Elektrode 4a auf einer Feldoxidschicht 9 angeordnet, die auf dem Substrat 2 vorgesehen ist. Die Elektrode 4b ist als Gateelektrode ausgebildet, die benachbart zu einem Kanalbereich 10 eines Feldeffekt-Transistors (FET) angeordnet ist. Der Kanalbereich 10 ist zwischen einer p⁺-Source 11 und einer p⁺-Drain 12 des Feldeffekt-Transistors in einem n-dotierten Bereich 13 gebildet, der in das Substrat 2 eingelassen ist. In Fig. 1 ist erkennbar, dass die Source 11 und die Drain 12 auf dem Bereich 13 angeordnet sind. Beidseits des Kanalbereichs 10 ist auf der Source 11 und der Drain 12 die Feldoxidschicht 9 angeordnet. Im Bereich des Kanalbereichs 10 weist die Feldoxidschicht 9 eine Unterbrechung auf Diese ist durch die Elektrode 4b überbrückt.

Zwischen der Passivierungsschicht 3 und dem Substrat 2 ist eine erste elektrische Isolationsschicht 14 angeordnet, die als Inter Metallic Dielectric (IMD) ausgebildet ist. Zwischen der Passivierungsschicht 3 und der ersten Isolationsschicht 14 ist bereichsweise eine erste Leiterbahn-Schicht 15 vorgesehen, die aus Aluminium besteht. Die erste Leiterbahn-Schicht 15 weist mehrere als Leiterbahnen ausgebildete Bereiche auf Zwischen der ersten Isolationsschicht 14 und dem Substrat 2 ist als zweite elektrische Isolationsschicht 16 eine Inter Layer Dielectric (ILD) angeordnet.

Zwischen der ersten Isolationsschicht 14 und der zweiten Isolationsschicht 16 ist eine zweite Leiterbahn-Schicht 17 vorgesehen, die aus Aluminium besteht und als Leiterbahnen ausgebildete Bereiche aufweist. Wie in Fig. 1 erkennbar ist, ist eine erste Leiterbahn der zweiten Leiterbahn-Schicht 17 mit dem n-dotierten Bereich 13, eine zweite Leiterbahn mit der Source 11 und eine dritte Leiterbahn mit der Drain 12 verbunden. In der zweiten Isolationsschicht 16 und der Feldoxidschicht 9 sind dazu Unterbrechungen vorgesehen, die jeweils von einem Abschnitt der Leiterbahnen durchsetzt werden. Die erste Isolationsschicht 14 und die zweite Isolationsschicht 16 weisen an den aktiven Oberflächenbereichen 5a, 5b der Elektroden 4a, 4b Unterbrechungen 18 auf, die mit der Öffnung 7 der Verkapselung 6 verbunden sind. Die zweite Leiterbahn-Schicht 17 ist durch die Isolationsschichten 14, 16 seitlich von den Unterbrechungen 18 beabstandet und gegen diese abgedichtet. Die Passivierungsschicht 3 wird von den Unterbrechungen 18 durchsetzt.

In Fig. 1 ist erkennbar, dass die erste Leiterbahn-Schicht 15 vollständig außerhalb des von der Öffnung 7 der Verkapselung 6 überdeckten Bereichs des Chips angeordnet ist. Außerdem ist die erste Leiterbahn-Schicht 15 durch die erste Isolationsschicht 14 und die Passivierungsschicht 3 seitlich von den Unterbrechungen 18 beabstandet und gegen diese abgedichtet. Deutlich ist erkennbar, dass die erste Leiterbahn-Schicht 15 in dem von der Öffnung 7 überdeckten Bereich des Chips in einer normal zur Erstreckungsebene des Chips verlaufenden Richtung durch die Passivierungsschicht 3 und die darunter befindliche erste Isolationsschicht 14 von der Öffnung 7 beabstandet ist. Dadurch wird eine gute Korrosionsbestständigkeit der ersten Leiterbahn-Schicht 15 gegen das in der Öffnung 7 befindliche Medium 8 erreicht. Die an die Öffnung 7 angrenzende Oberfläche der Passivierungsschicht 3 ist in den von den Unterbrechungen 18 beabstandeten Bereichen weitestgehend eben, so dass beim Auftreten von mechanischen Spannungen in dem Chip, die Gefahr, dass sich in der Passivierungsschicht 3 ein Riss bildet, entsprechend reduziert ist. Ein durch die erste Leiterbahn-Schicht 15 an einem dem Substrat 2 abgewandten Oberflächenbereich der Passivierungsschicht 3 hervorgerufener Absatz 19 der Passivierungsschicht 3 ist von der Verkapselung 6 überdeckt und seitlich von der Öffnung 7 beabstandet. Dadurch ist für den Fall, dass sich an dem Absatz 19 einmal ein Riss in der Passivierungsschicht bilden sollte, die zweite Leiterbahn-Schicht 17 durch die Verkapselung 6 weiterhin gegen die Öffnung 7 abgedichtet und somit vor Korrosion durch das Medium 8 geschützt.

Das in Fig. 1 gezeigte elektrische Bauelement 1 weist also einen Sensor- und/oder Aktuator-Chip mit einem Substrat 2 auf, auf dem eine Passivierungsschicht 3 und eine einen aktiven Oberflächenbereich 5a, 5b aufweisende Sensor- und/oder Aktuator-Struktur angeordnet ist. Der Chip ist von einer Verkapselung 6 umgeben, die eine Öffnung 7 hat, welche einen Zugang zu dem wenigstens einen aktiven Oberflächenbereich 5a, 5b bildet. Auf dem Substrat 2. ist ein Schichtstapel angeordnet, der - ausgehend von der Passivierungsschicht 3 zu dem Substrat 2 - zumindest eine erste Leiterbahn-Schicht 15, eine erste elektrische Isolationsschicht 14, eine zweite Leiterbahn-Schicht 17 und eine zweite elektrische Isolationsschicht 16 aufweist. Die erste Leiterbahn-Schicht 15 ist vollständig außerhalb des von der Öffnung 7 überdeckten Bereichs des Chips angeordnet ist. Mindestens eine Leiterbahn der zweiten Leiterbahn-Schicht 15 ist mit der Sensor- und/oder Aktuator-Struktur verbunden.

Erwähnt werden soll noch, dass die Leiterbahnen der Leiterbahnschichten 15, 17 durch Durchkontaktierungen miteinander verbunden sein können. Das Substrat 2 kann auch Glas bestehen.

## Patentansprüche

1. Elektrisches Bauelement (1) mit einem Sensor- und/oder Aktuator-Chip, insbesondere einem CMOS-Chip, der ein Substrat (2) hat, auf dem eine Passivierungsschicht (3) und mindestens eine, zumindest einen aktiven Oberflächenbereich (5a, 5b) aufweisende Struktur für einen Sensor und/oder Aktuator angeordnet sind, wobei der Chip von einer durch eine Vergussmasse gebildeten Verkapselung (6) umgeben ist, die zumindest eine Öffnung (7) hat, welche einen Zugang zu dem wenigstens einen aktiven Oberflächenbereich (5a, 5b) und der Passivierungsschicht (3) bildet, wobei der Chip In der Öffnung eine sich zumindest bereichsweise über die Passivierungsschicht (3) und den aktiven Oberflächenbereich (5a, 5b) erstreckende Interaktionsfläche hat, die in Gebrauchsstellung mit einem flüssigen oder pastösen Medium in Kontakt steht, wobei das Bauelement (1) zusätzlich zu der Vergussmasse eine erste elektrische Isolationsschicht (14) und eine zweite elektrische Isolationsschicht (16) aufweist, wobei die erste elektrische Isolationsschicht (14) zwischen der Passivierungsschicht (3) und dem Substrat (2) vorgesehen ist, wobei zwischen der Passivierungsschicht (3) und der ersten Isolationsschicht (14) bereichsweise eine erste Leiterbahn-Schicht (15) angeordnet ist, die mindestens einen als Leiterbahn ausgebildeten Bereich aufweist, wobei die zweite elektrische Isolationsschicht (16) zwischen der ersten Isolationsschicht (14) und dem Substrat (2) vorgesehen ist, wobei zwischen der ersten Isolationsschicht (14) und der zweiten Isolationsschicht (16) eine zweite Leiterbahn-Schicht (17) angeordnet ist, die mindestens einen als Leiterbahn ausgebildeten Bereich aufweist, und wobei mindestens eine der Leiterbahnen mit der Sensor- und/oder Aktuator-Struktur verbunden ist, wobei zumindest die ein elektrisches Potential führenden Bereiche der ersten Leiterbahn-Schicht (15) vollständig außerhalb des von der Interaktionsfläche überdeckten Bereichs des Chips angeordnet sind.

2. Elektrisches Bauelement (1) nach Anspruch 1, **dadurch gekennzeichnet, dass** die erste Leiterbahn-Schicht aus Metall, vorzugsweise aus Aluminium, und die zweite Leiterbahn-Schicht aus einem dotierten Halbleiterwerkstoff vorzugsweise aus Polysilizium, besteht.

3. Elektrisches Bauelement (1) nach Anspruch 1 oder 2, **dadurch gekennzeichnet, dass** auf dem Substrat (2) außerhalb des von der Öffnung (7) überdeckten Bereichs eine Struktur für eine elektronische Schaltung angeordnet ist, insbesondere für eine Auswerteeinrichtung, und dass diese Struktur über wenigstens eine der Leiterbahn-Schichten (15, 17) elektrisch mit der Sensor- und/oder Aktuator-Struktur verbunden ist.

## Claims

1. Electric component (1) having a sensor and/or actuator chip, in particular a CMOS chip, which has a substrate (2) on which a passivation layer (3) and at least one structure, which has at least one active surface region (5a, 5b) and is intended for a sensor and/or an actuator, are arranged, the chip being surrounded by an encapsulation (6) which is formed by a casting compound and has at least one opening (7) which forms an access to the at least one active surface region (5a, 5b) and to the passivation layer (3), the chip in the opening having an interaction area which extends, at least in regions, over the passivation layer (3) and the active surface region (5a, 5b) and is in contact with a liquid or pasty medium in the position of use, the component (1) having a first electrical insulation layer (14) and a second electrical insulation layer (16) in addition to the casting compound, the first electrical insulation layer (14) being provided between the passivation layer (3) and the substrate (2), a first interconnect layer (15), which has at least one region in the form of an interconnect, being arranged in regions between the passivation layer (3) and the first insulation layer (14), the second electrical insulation layer (16) being provided between the first insulation layer (14) and the substrate (2), a second interconnect layer (17), which has at least one region in the form of an interconnect, being arranged between the first insulation layer (14) and the second insulation layer (16), and at least one of the interconnects being connected to the sensor and/or actuator structure, at least those regions of the first interconnect layer (15) which carry an electrical potential being arranged completely outside that region of the chip which is covered by the interaction area.

2. Electric component (1) according to Claim 1, **characterized in that** the first interconnect layer is composed of metal, preferably aluminium, and the second interconnect layer is composed of a doped semiconductor material, preferably polysilicon.

3. Electric component (1) according to Claim 1 or 2, **characterized in that** a structure for an electronic circuit, in particular for an evaluation device, is arranged on the substrate (2) outside the region covered by the opening (7), and **in that** this structure is electrically connected to the sensor and/or actuator structure by means of at least one of the interconnect layers (15, 17).

## Revendications

1. Composant électrique (1) doté d'une puce de détecteur et/ou d'une puce d'actionneur, en particulier d'une puce CMOS qui présente un substrat (2) sur lequel sont disposées une couche de passivation (3) et au moins une structure de détecteur et/ou d'actionneur qui présente au moins une partie active (5a, 5b) de surface, la puce étant englobée dans une encapsulation (6) formée d'une pâte de scellement et qui présente au moins une ouverture (7) qui forme un accès vers la ou les parties actives (5a, 5b) de surface et la couche de passivation (3), la puce présentant dans l'ouverture une surface d'interaction dont au moins certaines parties s'étendent sur la couche de passivation (3) et la partie active (5a, 5b) de surface et qui en position d'utilisation est en contact avec un fluide liquide ou pâteux, le composant (1) présentant, en plus de la pâte de scellement, une première couche (14) d'isolation électrique et une deuxième couche (16) d'isolation électrique, la première couche (14) d'isolation électrique étant prévue entre la couche de passivation (3) et le substrat (2), au moins certaines parties d'une première couche (15) de pistes conductrices étant disposées entre la couche de passivation (3) et la première couche d'isolation (14) et présentant au moins une partie sous forme de piste conductrice, la deuxième couche d'isolation électrique (16) étant prévue entre la première couche d'isolation (14) et le substrat (2), une deuxième couche (17) de pistes conductrices étant disposée entre la première couche d'isolation (14) et la deuxième couche d'isolation (16), présentant au moins une partie sous forme de piste conductrice, et au moins l'une des pistes conductrices étant reliée à la structure de détecteur et/ou d'actionneur, au moins les parties conductrices d'un potentiel électrique de la première couche (15) de pistes conductrices étant disposées complètement à l'extérieur de la partie de la puce recouverte par la surface d'interaction.

2. Composant électrique (1) selon la revendication 1, **caractérisé en ce que** la première couche de pistes conductrices se compose d'un métal, de préférence de l'aluminium, et la deuxième couche de pistes conductrices se compose d'un matériau semi-conducteur dopé, de préférence du polysilicium.

3. Composant électrique (1) selon la revendication 1 ou 2, **caractérisé en ce qu'**une structure pour un circuit électronique, en particulier pour un dispositif d'évaluation, est disposée sur le substrat (2) au-dessus de la partie recouverte par l'ouverture (7) et **en ce que** cette structure est reliée électriquement à la structure de détecteur et/ou à la structure d'actionneur par au moins une des couches (15, 17) de pistes conductrices.
